(19) **Europäisches Patentamt European Patent Office Office européen des brevets**

(11) **EP 4 745 952 A1**

(12) **EUROPEAN PATENT APPLICATION**
published in accordance with Art. 153(4) EPC

(43) Date of publication:
20.05.2026 Bulletin 2026/21

(21) Application number: 24847701.0

(22) Date of filing: 13.05.2024

(51) International Patent Classification (IPC):
G09G 3/36 (2006.01)    G09G 3/32 (2016.01)
G09G 3/20 (2006.01)    G09G 3/34 (2006.01)
G02F 1/137 (2006.01)    G02F 1/1333 (2006.01)
G02F 1/1337 (2006.01)    G02F 1/1335 (2006.01)
G02F 1/133 (2006.01)

(86) International application number:
PCT/CN2024/092856

(87) International publication number:
WO 2025/025736 (06.02.2025 Gazette 2025/06)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.07.2023 CN 202310946935

(71) Applicant: HKC CORPORATION LIMITED
Shenzhen, Guangdong 518000 (CN)

(72) Inventors:
• WU, Han
  Shenzhen, Guangdong 518000 (CN)
• GAO, Xiang
  Shenzhen, Guangdong 518000 (CN)
• YUAN, Haijiang
  Shenzhen, Guangdong 518000 (CN)

(74) Representative: Osterhoff, Utz et al
Bockermann Ksoll
Griepenstroh Osterhoff
Patentanwälte
Bergstraße 159
44791 Bochum (DE)

(54) **DRIVING METHOD FOR DISPLAY PANEL, DRIVING APPARATUS FOR DISPLAY PANEL, AND READABLE STORAGE MEDIUM**

(57) A driving method for a display panel, a driving apparatus for the display panel, and a readable storage medium. The method includes: converting an initial response square wave signal based on a current display temperature to obtain a target response square wave signal (S10); determining a call requirement based on a target duty ratio in the target response square wave signal (S20); and calling a target response duration parameter table meeting the call requirement, and driving the display panel to work at the current display temperature based on the target response duration parameter table (S30).

converting an initial response square wave signal based on the current display temperature to obtain a target response square wave signal — S10

determining a call requirement based on the target duty ratio in the target response square wave signal — S20

calling a target response duration parameter table that meets the call requirement, and driving the display panel to work at the current display temperature based on the target response duration parameter table — S30

FIG. 2

## Description

The present application claims priority to Chinese Patent Application No. 202310946935.8, filed on July 28, 2023, the entire contents of which are incorporated herein by reference.

## TECHNICAL FIELD

The present application relates to the technical field of display, and in particular to a driving method for a display panel, a driving apparatus for the display panel, and a readable storage medium.

## BACKGROUND

In the current display apparatus market, liquid crystal display (LCD) apparatuses occupy a dominant position in the display apparatus market due to advantages such as high display quality, low electromagnetic radiation, and large visible area.

The display principle of the liquid crystal display apparatus is mainly realized by controlling the flipping of liquid crystal molecules. The response duration of the flipping of liquid crystal molecules refers to the response speed of each of pixels in the liquid crystal display apparatus to the input display signal. The faster the response speed, the lighter the blur and ghosting of the dynamic picture displayed by the liquid crystal display apparatus.

However, it is found in practical applications that the response duration of the flipping of liquid crystal molecules is affected by the temperature of the liquid crystal display apparatus. Too high or too low temperature will prolong the response duration of the flipping of liquid crystal molecules, resulting in blur and ghosting in the dynamic picture. For the existing adjustment of the response duration, the response duration of the flipping of liquid crystal molecules is generally compensated directly by a fixed compensation time to avoid the blur and ghosting. However, the fixed compensation time can only effectively compensate for the flipping of liquid crystal molecules at a certain temperature. For the liquid crystal molecules at other temperatures that are very different from this temperature, the compensation time cannot be taken into account, which further causes obvious blur and ghosting in the dynamic picture.

## SUMMARY

The main purpose of the present application is to provide a driving method for a display panel, a driving apparatus for the display panel and a readable storage medium, aiming to solve the technical problem that conventional response duration adjustment solutions cannot take into account response durations under different temperature conditions.

To achieve the above purpose, the present application provides a driving method for a display panel, which includes the following steps:

converting an initial response square wave signal based on a current display temperature to obtain a target response square wave signal, the response square wave signal representing a duty ratio of a response duration within a preset driving cycle;

determining a call requirement based on a target duty ratio in the target response square wave signal; and

calling a target response duration parameter table meeting the call requirement, and driving the display panel to work at the current display temperature based on the target response duration parameter table.

In an embodiment, before the step of converting the initial response square wave signal based on the current display temperature, the driving method further includes:

obtaining a driving cycle for driving the display panel to work at a current moment, an initial driving voltage output within the driving cycle, and an initial response duration for outputting the initial driving voltage;

generating the initial response square wave signal based on the driving cycle, the initial driving voltage and the initial response duration, and outputting the initial response square wave signal to a temperature detection module; and

after detecting the current display temperature of the display panel at the current moment through the temperature detection module, executing the step of converting the initial response square wave signal based on the current display temperature.

In an embodiment, the step of converting the initial response square wave signal based on the current display temperature to obtain the target response square wave signal includes:

after receiving the initial response square wave signal through the temperature detection module, taking an initial driving voltage of the initial response square wave signal as an input driving voltage of the temperature detection module, identifying an output driving voltage output by the temperature detection module based on the input driving voltage, and obtaining a voltage rising status of the output driving voltage within the driving cycle;

in response to identifying that the output driving voltage is equal to a preset driving voltage, taking a voltage when the output driving voltage is equal to the preset driving voltage as a target driving voltage, and determining a voltage maintenance duration of the target driving voltage based on the voltage rising status; and

generating the target response square wave signal based on the driving cycle, the target driving voltage and the voltage maintenance duration.

In an embodiment, before the step of determining the call requirement based on the target duty ratio in the target response square wave signal,, the driving method further includes:

returning to execute the step of converting the initial response square wave signal based on the current display temperature to obtain the target response square wave signal until a number of obtained target response square wave signals is equal to a preset number of signals, and respectively determining an expected response duration reflected by each of target duty ratios based on the target duty ratio in each of the target response square wave signals;

in response to determining all expected response durations are within a same display temperature range, executing the step of determining the call requirement based on the target duty ratio in the target response square wave signal;

in response to determining the expected response durations are not within the same display temperature range, executing the step of converting the initial response square wave signal based on the current display temperature to obtain the target response square wave signal; or

after selecting target response direction signals meeting a preset response square wave signal condition from the target response square wave signals as the target response square wave signals in a subsequent process of determining whether all the expected response durations are within the same display temperature range, executing the step of converting the initial response square wave signal based on the current display temperature to obtain the target response square wave signal, the preset response square wave signal condition is: taking a display temperature range where an expected response duration reflected by a target duty ratio of the last obtained target response square wave is located as a reference display temperature range, a display temperature range where expected response durations reflected by target duty ratios of other target response square wave signals is located is in the reference display temperature range and the other target response square wave signals are continuous with the last obtained target response square wave.

In an embodiment, the step of determining the call requirement based on the target duty ratio in the target response square wave signal includes:

determining an expected response duration for driving the display panel to work at the current display temperature based on the target duty ratio; and

determining the call requirement of response duration parameter tables as a preset response duration is sufficient to reflect the expected response duration.

In an embodiment, the step of calling the target response duration parameter table meeting the call requirement, and driving the display panel to work at the current display temperature based on the target response duration parameter table includes:

filtering the response duration parameter table based on the call requirement to obtain and call the target response duration parameter table meeting the call requirement; and

querying the target response duration parameter table to obtain a compensation voltage for a target driving voltage, compensating the target driving voltage based on the compensation voltage, and driving the display panel to work based on a compensated target driving voltage.

The present application also provides a display panel, which includes a driving apparatus for the display panel, a memory, a processor, and a computer processing program stored in the memory and executable on the processor. When the processor executes the computer processing program, the steps of the above-mentioned driving method for the display panel are implemented. The driving apparatus for the display panel includes:

a conversion module configured to convert an initial response square wave signal based on a current display temperature to obtain a target response square wave signal, the response square wave signal representing a duty ratio of a response duration within a preset driving cycle;

a determination module configured to determine a call requirement based on a target duty ratio in the target response square wave signal; and

a calling module configured to call a target response duration parameter table meeting the call requirement, and driving the display panel to work at the current display temperature based on the target response duration parameter table.

In an embodiment, the conversion module includes a screen drive board and a temperature detection module, a signal output end of the screen drive board is connected to an input end of the temperature detection module and is configured to transmit an initial square wave signal to the temperature detection module, and a signal input end of the screen drive board is connected to an output end of the temperature detection module and is configured to receive the output driving voltage output by the temperature detection module; and the screen drive board includes the determination module and the calling module.

In an embodiment, the temperature detection module includes a thermistor and a capacitor; one end of the thermistor is connected to the signal output end of the screen drive board, the other end of the thermistor is connected to the signal input end of the screen drive board, one end of the capacitor is connected to a connection line between the thermistor and the signal input end of the screen drive board, and the other end of the capacitor is grounded.

In addition, to achieve the above purpose, the present application also provides a readable storage medium. A computer program is stored on the readable storage medium, and when the computer program is executed by a processor, the steps of the above-mentioned driving method for the display panel are implemented.

In the present application, an initial response square wave signal is converted based on the current display temperature to obtain a target response square wave signal. The response square wave signal represents the duty ratio of the response duration within a preset driving cycle. A call requirement is determined based on the target duty ratio in the target response square wave signal, so as to determine the response duration corresponding to the normal output of the display picture by the liquid crystal display apparatus at the current display temperature. A target response duration parameter table that meets the call requirement is called, and the display panel at the current display temperature is driven to work based on the target response duration parameter table. Based on the call requirement corresponding to the response duration, the target response duration parameter table capable of compensating the target driving voltage in the target response square wave signal is called, and the target driving voltage is compensated based on the compensation driving voltage in the target response duration parameter table. This enables the compensated target driving voltage to drive the liquid crystal molecules to flip within an effective response duration, effectively accelerating the response speed of each of pixels to the input display signal under various temperatures, and avoiding the problem of obvious blur and ghosting in the dynamic picture caused by failure to take into account different temperatures.

**BRIEF DESCRIPTION OF THE DRAWINGS**

FIG. 1 is a schematic structural diagram of a terminal in a hardware operating environment involved in a solution according to an embodiment of the present application.

FIG. 2 is a schematic flow chart of a driving method for a display panel according to a first embodiment of the present application.

FIG. 3 is a schematic square wave signal diagram of converting an initial response square wave signal to a target response square wave signal.

FIG. 4 is a schematic diagram of calling different response duration parameter tables based on different display temperatures in the present application.

FIG. 5 is a schematic flow chart of the driving method for the display panel according to a second embodiment of the present application.

FIG. 6 is a schematic flow chart of the driving method for the display panel according to a third embodiment of the present application.

FIG. 7 is a schematic module structural diagram of a driving apparatus for the display panel of the present application.

FIG. 8 is a schematic connection structural diagram of a screen drive board and a temperature detection module.

Description of reference signs:

[table 1_sm_0001]

| reference sign | name |
| --- | --- |
| TCON | screen drive board |
| 11 | temperature detection module |
| R1 | thermistor |
| C1 | capacitor |

The realization, functional features and advantages of the purpose of the present application will be further described with reference to the embodiments and the accompanying drawings.

## DETAILED DESCRIPTION OF THE EMBODIMENTS

It should be understood that the specific embodiments described herein are only used to explain the present application, and are not used to limit the present application.

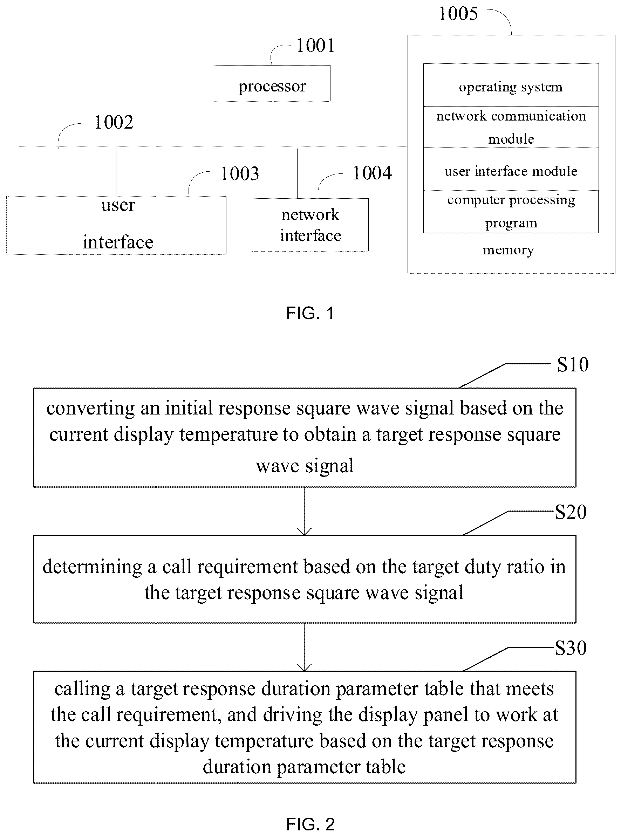

As shown in FIG. 1, FIG. 1 is a schematic structural diagram of a terminal in a hardware operating environment involved in a solution according to an embodiment of the present application.

The application carrier of the driving method for the display panel in the embodiment of the present application is a display panel. As shown in FIG. 1, the display panel may include: a processor 1001 (e.g., a CPU), a network interface 1004, a user interface 1003, a memory 1005, and a communication bus 1002. The communication bus 1002 is used to realize connection and communication among these components. The user interface 1003 may include a display area (Display) and an input unit such as a keyboard (Keyboard), and the user interface 1003 may also include a standard wired interface and a wireless interface. The network interface 1004 may include a standard wired interface and a wireless interface (e.g., a WI-FI interface). The memory 1005 may be a high-speed RAM memory, or a non-volatile memory (e.g., a disk memory). The memory 1005 may also be a storage apparatus independent of the processor 1001.

In an embodiment, the display panel may further include a camera, a radio frequency (RF) circuit, a sensor, an audio circuit, a WiFi module, etc. The sensor may include an optical sensor, a motion sensor, and other sensors. Specifically, the optical sensor may include an ambient light sensor and a proximity sensor. The ambient light sensor can adjust the brightness of the display screen according to the brightness of the ambient light, and the proximity sensor can turn off the display screen and/or the backlight when the mobile terminal is moved to the ear. As a type of motion sensor, the gravity acceleration sensor can detect the magnitude of acceleration in various directions (generally three axes), and can detect the magnitude and direction of gravity when stationary, which can be used in applications for identifying the posture of the mobile terminal (e.g., horizontal/vertical screen switching, related games, magnetometer posture calibration), vibration identification-related functions (e.g., pedometer, tapping), etc. Of course, the mobile terminal may also be equipped with other sensors such as a gyroscope, a barometer, a hygrometer, a thermometer, and an infrared sensor, which will not be repeated here.

Those skilled in the art can understand that the structure of the display panel shown in FIG. 1 does not constitute a limitation on the display panel, and may include more or fewer components than those shown in the drawings, or combine some components, or be with different configurations.

As shown in FIG. 1, the memory 1005 as a computer storage medium may include an operating system, a network communication module, a user interface module, and a computer processing program.

In the terminal shown in FIG. 1, the network interface 1004 is mainly used to connect to a background server and perform data communication with the background server, the user interface 1003 is mainly used to connect to a client (user end) and perform data communication with the client, and the processor 1001 may be used to call the computer processing program stored in the memory 1005 and execute the following operations:

converting an initial response square wave signal based on the current display temperature to obtain a target response square wave signal, where the response square wave signal represents the duty ratio of the response duration within a preset driving cycle;

determining a call requirement based on the target duty ratio in the target response square wave signal; and

calling a target response duration parameter table that meets the call requirement, and driving the display panel to work at the current display temperature based on the target response duration parameter table.

Further, the processor 1001 may call the computer program stored in the memory 1005 and also execute the following operations:

before the step of converting the initial response square wave signal based on the current display temperature, obtaining the driving cycle for driving the display panel to work at the current moment, the initial driving voltage output within the driving cycle, and the initial response duration for outputting the initial driving voltage;

generating the initial response square wave signal based on the driving cycle, the initial driving voltage and the initial response duration, and outputting the initial response square wave signal to a temperature detection module; and

after detecting the current display temperature of the display panel at the current moment through the temperature detection module, executing the step of converting the initial response square wave signal based on the current display temperature.

Further, the processor 1001 may call the computer program stored in the memory 1005 and also execute the following operations:

the step of converting the initial response square wave signal based on the current display temperature to obtain the target response square wave signal includes: after receiving the initial response square wave signal through the temperature detection module, taking the initial driving voltage of the initial response square wave signal as the input driving voltage of the temperature detection module, identifying the output driving voltage output by the temperature detection module based on the input driving voltage, and obtaining the voltage rising status of the output driving voltage within the driving cycle;

in response to identifying that the output driving voltage is equal to the preset driving voltage, taking the voltage when the output driving voltage is equal to the preset driving voltage as the target driving voltage, and determining the voltage maintenance duration of the target driving voltage based on the voltage rising status; and

generating the target response square wave signal based on the driving cycle, the target driving voltage and the voltage maintenance duration.

Further, the processor 1001 may call the computer program stored in the memory 1005 and also execute the following operations:

before the step of determining the call requirement based on the target duty ratio in the target response square wave signal, returning to execute the step of converting the initial response square wave signal based on the current display temperature to obtain the target response square wave signal until the number of the obtained target response square wave signals is equal to the preset number of signals, and respectively determining the expected response duration reflected by each of target duty ratios based on the target duty ratio in each of the target response square wave signals;

in response to determining that all the expected response durations are within the same display temperature range, executing the step of determining the call requirement based on the target duty ratio in the target response square wave signal; and

in response to determining that the expected response durations are not within the same display temperature range, executing the step of converting the initial response square wave signal based on the current display temperature to obtain the target response square wave signal; or

selecting the target response direction signals that meet the preset response square wave signal conditions from the target response square wave signals as the target response square wave signals in the subsequent process of determining whether all the expected response durations are within the same display temperature range, and executing the step of converting the initial response square wave signal based on the current display temperature to obtain the target response square wave signal. The preset response square wave signal condition is that the display temperature range where the expected response duration reflected by the target duty ratio is located is taken as the reference display temperature range, the reference display temperature range is the display temperature range where the expected response duration reflected by the target duty ratio of the last obtained target response square wave is located, and the target response square wave signals are continuous with the last target response square wave.

Further, the processor 1001 may call the computer program stored in the memory 1005 and also execute the following operations:

the step of determining the call requirement based on the target duty ratio in the target response square wave signal includes: determining the expected response duration for driving the display panel to work at the current display temperature based on the target duty ratio; and

determining the call requirement of response duration parameter tables as a preset response duration is sufficient to reflect the expected response duration.

Further, the processor 1001 may call the computer program stored in the memory 1005 and also execute the following operations:

the step of calling the target response duration parameter table that meets the call requirement and driving the display panel to work at the current display temperature based on the target response duration parameter table includes: filtering the response duration parameter tables based on the call requirement to obtain and call the target response duration parameter table that meets the call requirement; and

querying the target response duration parameter table to obtain the compensation voltage for the target driving voltage, compensating the target driving voltage based on the compensation voltage, and driving the display panel to work based on the compensated target driving voltage.

With reference to FIG. 2, FIG. 2 is a schematic flow chart of a driving method for the display panel according to a first embodiment of the present application. The driving method for the display panel includes the following steps:
step S10: converting an initial response square wave signal based on the current display temperature to obtain a target response square wave signal, where the response square wave signal represents the duty ratio of the response duration within a preset driving cycle.

It should be noted that the current display temperature is the temperature of the display panel at the current moment detected by the temperature detection module. The initial response square wave signal represents the initial response duration of the flipping of liquid crystal molecules within a driving cycle at the current moment. The target response square wave signal represents the target response duration of the flipping of liquid crystal molecules within a driving cycle under the temperature of the display panel at the current moment. The driving cycle of the target response square wave signal is consistent with the driving cycle of the initial response square wave signal before conversion into the target response square wave signal.

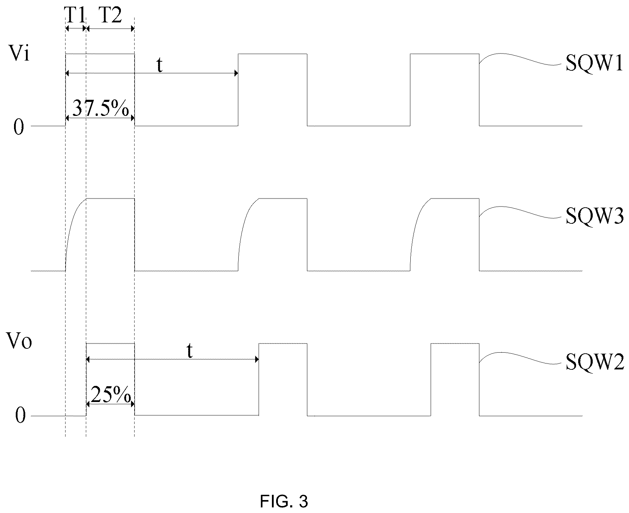

In this embodiment, after the current display temperature at the current moment is detected by the temperature detection module, the initial response square wave signal is converted based on the current display temperature. Specifically, the initial response duration of the flipping of liquid crystal molecules at a normal temperature is re-determined based on the current display temperature, so as to determine the target response duration required for the liquid crystal molecules to flip under the current display temperature. Taking FIG. 3 as an example, assuming that SQW1 is an initial response square wave signal with a cycle of 3.2 microseconds, a high-level (initial response duration) duration of 1.2 microseconds (accounting for 37.5% of a single cycle), and a voltage of Vi/0, after the current display temperature is determined, the initial response square wave signal is converted based on the current display temperature. After determining the driving voltage capable of enabling the liquid crystal molecules to flip under the current display temperature, the duration for which the driving voltage is maintained is determined as the high level. It can be seen from FIG. 3 that the converted target response square wave signal is a target response square wave signal with a cycle of 3.2 microseconds, a high-level (target response duration) duration of 0.8 microseconds (accounting for 25% of a single cycle), and a voltage of Vo/0. This realizes the dynamic change of the target response duration of liquid crystal molecules based on the real-time display temperature, thereby realizing the optimal response duration configuration in all temperature ranges.

By obtaining the response square wave signal under the current display temperature, the expected response duration required for the normal flipping of liquid crystal molecules under various display temperatures is determined in real time based on the response square wave signal, and the driving voltage required for the normal flipping of liquid crystal molecules is determined based on the expected response duration, which improves the accuracy of the determined driving voltage.

Step S20: determining a call requirement based on the target duty ratio in the target response square wave signal.

Still taking FIG. 3 as an example, after obtaining the target duty ratio of 25% in the target response square wave signal, the expected response duration for the normal flipping of liquid crystal molecules at the current display temperature is determined based on the target duty ratio of 25%. The expected response duration can ensure that there is no blur or ghosting in the display picture formed by the flipping of liquid crystal molecules.

After determining the expected response duration for the normal flipping of liquid crystal molecules at the current display temperature, the call requirement for the response duration parameter table where the preset response duration is consistent with the expected response duration is determined, so as to directly obtain the response duration parameter table consistent with the call requirement from the memory storing multiple response duration parameter tables based on the call requirement.

In an embodiment, the step of determining the call requirement based on the target duty ratio in the target response square wave signal in step S20 includes:

step S201: determining the expected response duration for driving the display panel to work at the current display temperature based on the target duty ratio; and

step S202: determining the call requirement of response duration parameter tables as a preset response duration is sufficient to reflect the expected response duration.

After the target response square wave signal of the liquid crystal molecules at the current display temperature is determined based on step S10, the target duty ratio in the target response square wave signal is obtained at this time, i.e., the target response duration required for the flipping of liquid crystal molecules at the current display temperature represented by the target response square wave signal. For example, for SQW2 in FIG. 3, the target duty ratio of 25% of SQW2 is obtained, and the call requirement related to the target response duration for the liquid crystal molecules to flip is determined as the response duration parameter table 0 based on this 25%.

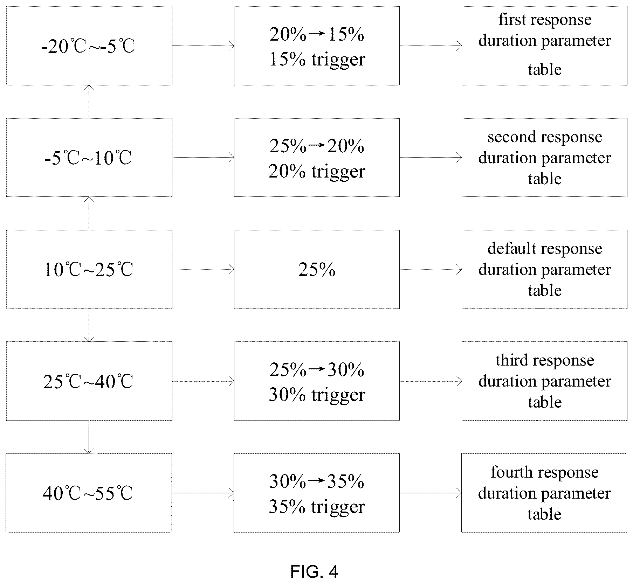

It should be noted that taking FIG. 4 as an example, assuming that the display temperature when the target duty ratio is detected to be 25% is 10°C to 25°C, the call requirement is determined based on the target duty ratio of 25% at this time. In this embodiment, the call requirement determined based on the target duty ratio of 25% is the response duration default parameter table.

When the display temperature is detected to drop to the display temperature range of -5°C to 10°C during the subsequent operation of the display panel, and the target duty ratio drops from 25% to 20%, the call requirement is determined based on the target duty ratio of 20%. In this embodiment, the call requirement determined based on the target duty ratio of 20% is the second response duration parameter table. When the display panel is continuously detected during its operation, if the display temperature is detected to further drop to the display temperature range of -20°C to -5°C and the target duty ratio drops from 20% to 15%, the call requirement is determined based on the target duty ratio of 15%. In this embodiment, the call requirement determined based on the target duty ratio of 15% is the response duration parameter table 1. By analogy, when the display temperature drops to another display temperature range and the target duty ratio also drops to the target duty ratio corresponding to the other display temperature, a new call requirement is determined based on the target duty ratio corresponding to the other display temperature range, so as to ensure that the liquid crystal molecules can flip quickly in a low-temperature environment and avoid the blur and ghosting of the display picture caused by the delayed flipping of liquid crystal molecules due to low temperature.

Alternatively, when the display temperature is detected to rise to the display temperature range of 25°C to 40°C during the subsequent operation of the display panel, and the target duty ratio rises from 25% to 30%, the call requirement is determined based on the target duty ratio of 30%. In this embodiment, the call requirement determined based on the target duty ratio of 30% is the third response duration parameter table. When the display panel is continuously detected during its operation, if the display temperature is detected to further rise to the display temperature range of 40°C to 55°C and the target duty ratio rises from 30% to 35%, the call requirement is determined based on the target duty ratio of 35%. In this embodiment, the call requirement determined based on the target duty ratio of 35% is the fourth response duration parameter table, and so on. The call requirement is dynamically determined based on the target duty ratio converted based on the current display temperature, so as to call the response duration parameter table that can meet the normal flipping of liquid crystal molecules in a high-temperature environment for targeted compensation.

Step S30: calling a target response duration parameter table that meets the call requirement, and driving the display panel to work at the current display temperature based on the target response duration parameter table.

Since the target driving voltage Vo in the target response square wave signal is a preset driving voltage set based on the initial driving voltage Vi, its purpose is to determine the duration for which the preset driving voltage is reached and maintained under the current display temperature, i.e., the expected response duration. However, it is impossible to drive the liquid crystal molecules to flip within the expected response duration based on the initial driving voltage. Therefore, in this embodiment, after the expected response duration is determined, the target response duration parameter table that meets the call requirement corresponding to the expected response duration is called based on the expected response duration, so as to obtain the compensation voltage capable of driving the liquid crystal molecules to flip within the expected response duration from the target response duration parameter table.

After the call requirement is determined, the target response duration parameter table consistent with the call requirement is directly called from the memory storing the response duration parameter tables based on the call requirement. The preset driving voltage (i.e., the target driving voltage) is compensated based on the compensation voltage in the target response duration parameter table, so that the compensated target driving voltage can drive the liquid crystal molecules to flip within the expected response duration. The display panel is driven to work based on the compensated driving voltage, which effectively accelerates the response speed of each of pixels to the input display signal under various temperatures and avoids the problem of obvious blur and ghosting in the dynamic picture caused by failure to take into account different temperatures.

In an embodiment, the step of calling the target response duration parameter table that meets the call requirement and driving the display panel to work at the current display temperature based on the target response duration parameter table in step S30 includes:

step S301: filtering the response duration parameter tables based on the call requirement to obtain and calling the target response duration parameter table that meets the call requirement.

In this embodiment, after the call requirement is determined by the screen drive board, the screen drive board filters the response duration parameter tables in the memory based on the call requirement, so as to filter and call the target response duration parameter table consistent with the determined call requirement from the memory, thereby realizing the effective and accurate flipping of liquid crystal molecules.

Step S302: querying the target response duration parameter table to obtain the compensation voltage for the target driving voltage, compensating the target driving voltage based on the compensation voltage, and driving the display panel to work based on the compensated target driving voltage.

The called target response duration parameter table is queried to obtain the compensation voltage required for realizing the expected response duration of the flipping of liquid crystal molecules at the current display temperature. The target driving voltage is directly compensated by this compensation voltage, so that when the liquid crystal molecules are driven by the compensated target driving voltage, the liquid crystal molecules can flip within the expected response duration, realizing a display picture without blur and ghosting, and avoiding the disadvantage that the compensation voltage obtained based on a single response duration parameter table in the conventional method cannot effectively ensure the flipping of liquid crystal molecules within the expected response duration due to non-targeted compensation.

In this embodiment, the initial response square wave signal is converted based on the current display temperature to obtain the target response square wave signal, where the response square wave signal represents the duty ratio of the response duration within a preset driving cycle. The call requirement is determined based on the target duty ratio in the target response square wave signal to determine the response duration corresponding to the normal output of the display picture by the liquid crystal display apparatus at the current display temperature. The target response duration parameter table that meets the call requirement is called, and the display panel at the current display temperature is driven to work based on the target response duration parameter table. Based on the call requirement corresponding to the response duration, the target response duration parameter table capable of compensating the target driving voltage in the target response square wave signal is called, and the target driving voltage is compensated based on the compensation driving voltage in the target response duration parameter table. This enables the compensated target driving voltage to drive the liquid crystal molecules to flip within an effective response duration, effectively accelerating the response speed of each of the pixels to the input display signal under various temperatures, and avoiding the problem of obvious blur and ghosting in the dynamic picture caused by failure to take into account different temperatures.

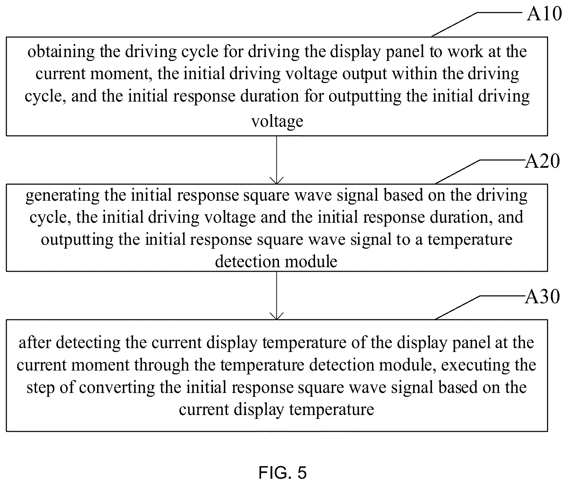

With reference to FIG. 5, FIG. 5 is a schematic flow chart of the driving method for the display panel according to a second embodiment of the present application. Before the step of converting the initial response square wave signal based on the current display temperature in step S10, the driving method further includes:

step A10: obtaining the driving cycle for driving the display panel to work at the current moment, the initial driving voltage output within the driving cycle, and the initial response duration for outputting the initial driving voltage.

The screen drive board in this embodiment dynamically obtains the driving cycle for driving the display panel to work at the current moment, the driving voltage output within the driving cycle, and the response duration for outputting the driving voltage. Based on the obtained driving cycle, the driving voltage and the response duration at the current moment, the driving state of the liquid crystal molecules at the current moment is determined, i.e., determining the driving voltage and response duration used to drive the liquid crystal molecules at the current moment, which is conducive to rapid determination in the subsequent process.

Step A20: generating the initial response square wave signal based on the driving cycle, the initial driving voltage and the initial response duration, and outputting the initial response square wave signal to a temperature detection module.

After the driving state of the liquid crystal molecules at the current moment is obtained, the corresponding initial response square wave signal is directly generated based on the driving state of the liquid crystal molecules. Specifically, in this embodiment, after the screen drive board obtains the driving cycle for driving the liquid crystal molecules to flip at the current moment, the initial driving voltage output within the driving cycle, and the initial response duration for outputting the initial driving voltage, a general-purpose input/output (GPIO) port of the screen drive board is used as the initial response square wave signal generation port. The obtained driving cycle, the initial driving voltage and the initial response duration generate a corresponding initial response square wave signal through this GPIO port. Since the GPIO port used as the square wave signal generation port is connected to the input port of the temperature detection module in this embodiment, the initial response square wave signal generated through this GPIO port is output to the temperature detection module. Because the initial response square wave signal includes the initial driving voltage, in practice, after the initial response square wave signal is output to the input port of the temperature detection module, the initial driving voltage in the initial response square wave signal serves as the input driving voltage of the input port of the temperature detection module.

The generated initial response square wave signal enables technicians to conveniently observe the driving state of the liquid crystal molecules at the current moment, with higher directness and visibility.

Step A30: after detecting the current display temperature of the display panel at the current moment through the temperature detection module, executing the step of converting the initial response square wave signal based on the current display temperature.

It should be noted that the temperature detection module can detect the display temperature of the display panel in real time. In this embodiment, another GPIO port of the screen drive board is used to generate the target response square wave signal, and this GPIO port used as the target response square wave signal generation port is connected to the output port of the temperature detection module.

After the initial response square wave signal is output to the temperature detection module, the temperature detection module converts the initial driving voltage in the initial response square wave signal into the output driving voltage at the output port of the temperature detection module based on the detected current display temperature. The screen drive board detects the output driving voltage at the output port of the temperature detection module through another GPIO port connected to the output port of the temperature detection module, so as to detect the change state of the output driving voltage within the driving cycle, and to detect whether the output driving voltage reaches the preset driving voltage and the voltage maintenance duration (i.e., the response duration) after the output driving voltage reaches the preset driving voltage, thereby confirming the response duration required for ensuring the normal flipping of liquid crystal molecules at the current display temperature.

In an embodiment, the step of converting the initial response square wave signal based on the current display temperature to obtain the target response square wave signal in step S10 includes:

step S101: after receiving the initial response square wave signal through the temperature detection module, taking the initial driving voltage of the initial response square wave signal as the input driving voltage of the temperature detection module, identifying the output driving voltage output by the temperature detection module based on the input driving voltage, and obtaining the voltage rising status of the output driving voltage within the driving cycle.

After the screen drive board outputs the initial response square wave signal generated at the current moment to the input port of the temperature detection module, since the temperature detection module in this embodiment is an RC integrating circuit, the temperature detection module takes the initial driving voltage in the initial response square wave signal as the input driving voltage of the temperature detection module. After the input driving voltage passes through the RC integrating circuit, the output driving voltage generated by the input driving voltage changes based on the resistance value in the RC integrating circuit. The larger the resistance value, the longer the time required for the output driving voltage to reach the preset driving voltage. At this time, the screen drive board detects and identifies the output driving voltage in real time through the GPIO port connected to the output port of the temperature detection module, so as to identify whether the output driving voltage output based on the input driving voltage reaches the preset driving voltage and obtain the voltage rising status of the output driving voltage within the driving cycle.

Step S102: in response to identifying that the output driving voltage is equal to the preset driving voltage, taking the voltage when the output driving voltage is equal to the preset driving voltage as the target driving voltage, and determining the voltage maintenance duration of the target driving voltage based on the voltage rising status.

It should be noted that the preset driving voltage is set based on the input driving voltage. The preset driving voltage is set to be equal to or less than the input driving voltage based on the actual rising status of the voltage at various display temperatures. When the display temperature is too high or too low, to avoid the conversion failure caused by the output driving voltage being unable to reach the preset driving voltage if the preset driving voltage is set to the input driving voltage, the preset driving voltage is set to a voltage value lower than the input driving voltage at this time, so as to avoid the situation that the liquid crystal molecules cannot flip due to conversion failure.

When the screen drive board identifies that the output driving voltage at the output port of the temperature detection module is equal to the preset driving voltage through the GPIO port connected to the output port of the temperature detection module, the output driving voltage equal to the preset driving voltage is taken as the target driving voltage at this time. The voltage rising process of the output driving voltage rising to the preset driving voltage within the driving cycle corresponding to the input driving voltage is obtained, and the voltage maintenance duration of the target driving voltage (i.e., the preset driving voltage) is determined based on the voltage rising process, so as to determine the target response duration required for the flipping of liquid crystal molecules at the current display temperature.

For example, taking FIG. 3 as an example, the voltage rising status SQW3 of the output driving voltage within the driving cycle obtained by the screen drive board is that the output driving voltage gradually rises to the preset driving voltage Vo at time T1 and maintains the preset driving voltage for duration T2. Then, Vo is the target driving voltage, and the duration T2 is the voltage maintenance duration, i.e., the target response duration.

Step S103: generating the target response square wave signal based on the driving cycle, the target driving voltage and the voltage maintenance duration.

After obtaining the target driving voltage and the voltage maintenance duration at the current display temperature at the current moment, the corresponding target response square wave signal is directly generated based on the driving cycle of the input driving voltage, the target driving voltage and the voltage maintenance duration. Specifically, in this embodiment, after the screen drive board obtains the voltage information of the output driving voltage at the output port of the temperature detection module at the current display temperature, based on the target driving voltage, the voltage maintenance duration in the voltage information and the driving cycle of the input driving voltage, another GPIO port of the screen drive board is used as the target response square wave signal generation port. The obtained target driving voltage, voltage maintenance duration and driving cycle of the input driving voltage generate a corresponding target response square wave signal through this GPIO port.

The generated target response square wave signal enables technicians to directly and visually obtain the response duration required for driving the liquid crystal molecules to flip normally at the current display temperature.

In this embodiment, the initial response square wave signal and the target response square wave signal generated by the screen drive board enable technicians to conveniently observe the driving state of the liquid crystal molecules at the current moment and the response duration required for driving the liquid crystal molecules to flip normally at the current display temperature, improving the directness and visibility of obtaining the driving information of the liquid crystal molecules.

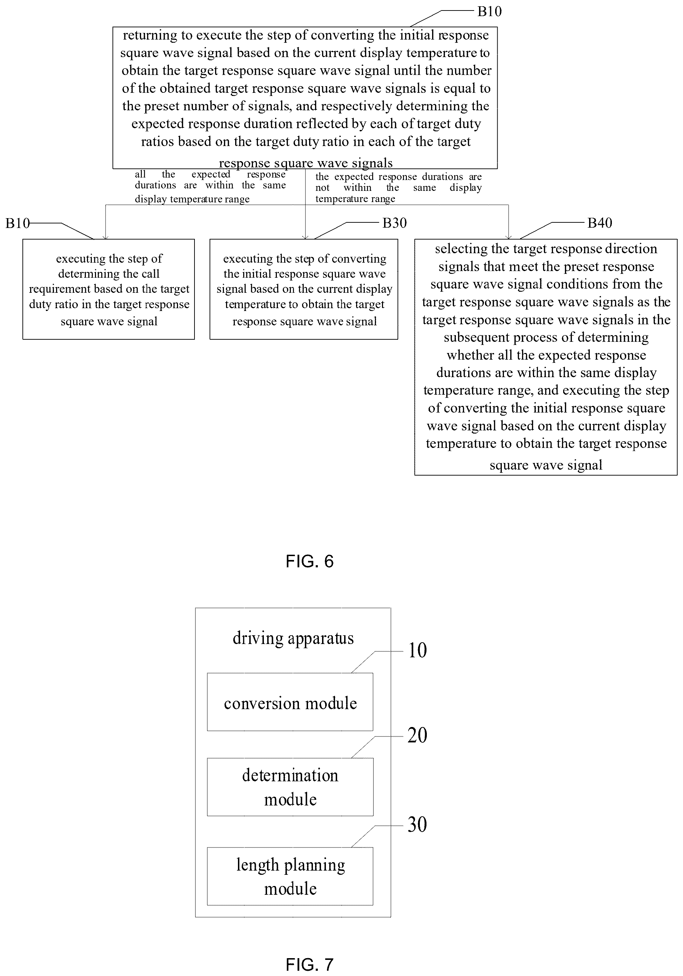

With reference to FIG. 6, FIG. 6 is a schematic flow chart of the driving method for the display panel according to a third embodiment of the present application. Before the step of determining the call requirement based on the target duty ratio in the target response square wave signal in step S20, the driving method further includes:

step B10: returning to execute the step of converting the initial response square wave signal based on the current display temperature to obtain the target response square wave signal until the number of the obtained target response square wave signals is equal to the preset number of signals, and respectively determining the expected response duration reflected by each of target duty ratios based on the target duty ratio in each of the target response square wave signals.

Considering that there is a time difference between the increase and decrease of the display temperature, the current display temperature may switch to another display temperature after only lasting for a short negligible duration. If the call and compensation of the compensation voltage corresponding to the response duration are performed for the display temperature that only lasts for a short negligible duration, there will be a situation of wrong call. Therefore, to avoid the compensation error caused by wrong call during the change of the display temperature, this embodiment obtains the target response square wave signals of the display temperature at consecutive moments. A preset number of signals for continuous obtaining can be set. For example, after ten target response square wave signals corresponding to the preset number of signals are continuously obtained, the expected response duration reflected by each target response square wave signal is respectively determined based on the target duty ratio in each of the ten obtained target response square wave signals. Since the expected response duration corresponds to the display temperature, the display temperature range where each target response square wave signal is located can be determined based on the determined expected response duration, so as to determine whether the obtained target response square wave signals are all in the same display temperature range, thereby identifying the transient change of the display temperature.

Step B20: in response to determining that all the expected response durations are within the same display temperature range, executing the step of determining the call requirement based on the target duty ratio in the target response square wave signal.

in response to determining the expected response durations corresponding to the obtained target response square wave signals are all within the same display temperature range, it is determined that there is no sudden change of the display temperature at present, i.e., there is no compensation error caused by wrong call. Therefore, the step of step S20 can be executed at this time.

Step B30: in response to determining that the expected response durations are not within the same display temperature range, executing the step of converting the initial response square wave signal based on the current display temperature to obtain the target response square wave signal; or

in response to determining the expected response durations corresponding to the obtained target response square wave signals are not within the same display temperature range, it indicates that there is one or more sudden temperature changes in the obtained target response square wave signals. In this case, the compensation of the compensation voltage will have the problem of compensation error due to the too fast change of the display temperature. Therefore, the display panel at the moment corresponding to the obtained target response square wave signals is directly driven based on the target driving voltage in the target response square wave signals, and the obtaining of new target response square wave signals is restarted at the same time.

Step B40: selecting the target response direction signals that meet the preset response square wave signal conditions from the target response square wave signals as the target response square wave signals in the subsequent process of determining whether all the expected response durations are within the same display temperature range, and executing the step of converting the initial response square wave signal based on the current display temperature to obtain the target response square wave signal. The preset response square wave signal condition is that the display temperature range where the expected response duration reflected by the target duty ratio is located is taken as the reference display temperature range, the reference display temperature range is the display temperature range where the expected response duration reflected by the target duty ratio of the last obtained target response square wave is located, and the target response square wave signals are continuous with the last target response square wave.

In another embodiment, in response to determining the expected response durations corresponding to the obtained target response square wave signals are not within the same display temperature range, the display temperature range where the expected response duration reflected by the target duty ratio of the last obtained target response square wave is located can be taken as the reference display temperature range. Other target response square wave signals where the display temperature range of the expected response duration reflected by the target duty ratio is the reference display temperature range and are continuous with the last target response direction signal are obtained from the ten obtained target response square wave signals. The last target response square wave signal and the other target response square wave signals are taken as the target response direction signals in the subsequent process of determining whether all the expected response durations are within the same display temperature range. For example, among the obtained target response square wave signals ① to ⑩, the other target response square wave signals that are in the same display temperature range as the target response square wave signal ⑩ and continuous with the target response square wave signal ⑩ are the target response square wave signals ⑦, ⑧ and ⑨. Then, the target response square wave signals ⑦, ⑧, ⑨ and ⑩ are used as the target response square wave signals in the subsequent process of determining whether all the expected response durations are within the same display temperature range. Therefore, only six new target response square wave signals need to be obtained in the subsequent re-obtaining of target response square wave signals.

In this embodiment, by setting a preset number of signals for continuous obtaining, after the target response square wave signals corresponding to the preset number of signals are continuously obtained, the expected response duration reflected by each target response square wave signal is respectively determined based on the target duty ratio in each of the obtained target response square wave signals. The display temperature range where each target response square wave signal is located is determined based on the determined expected response duration, so as to determine whether the obtained target response square wave signals are all in the same display temperature range, thereby identifying the transient change of the display temperature and avoiding the compensation error caused by wrong call due to sudden temperature change.

With reference to FIG. 7, FIG. 7 is a schematic module structural diagram of a driving apparatus for the display panel of the present application. The driving apparatus for the display panel includes:

a conversion module 10 configured to convert an initial response square wave signal based on the current display temperature to obtain a target response square wave signal, where the response square wave signal represents the duty ratio of the response duration within a preset driving cycle;

a determination module 20 configured to determine a call requirement based on the target duty ratio in the target response square wave signal; and

a calling module 30 configured to call a target response duration parameter table that meets the call requirement, and drive the display panel to work at the current display temperature based on the target response duration parameter table.

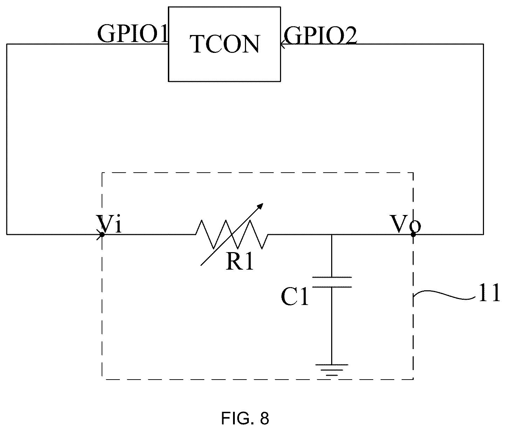

Specifically, as shown in FIG. 8, the conversion module is composed of a screen drive board TCON and a temperature detection module 11. The signal output end of the screen drive board TCON is connected to the input end of the temperature detection module 11, and is configured to transmit the initial square wave signal to the temperature detection module 11. The signal input end of the screen drive board TCON is connected to the output end of the temperature detection module 11, and is configured to receive the output driving voltage output by the temperature detection module 11;

The determination module and the calling module are included in the screen drive board TCON.

The conversion module is used to convert the response square wave signal and the input driving voltage. One GPIO1 port of the screen drive board TCON is used as the initial response square wave signal generation port. The obtained driving cycle, initial driving voltage and initial response duration generate a corresponding initial response square wave signal through this GPIO1 port. Since the GPIO1 port used as the square wave signal generation port is connected to the input end of the temperature detection module 11 in this embodiment, the initial response square wave signal generated through this GPIO1 port is output to the temperature detection module 11. Because the initial response square wave signal includes the initial driving voltage, in practice, the initial driving voltage in the initial response square wave signal serves as the input driving voltage Vi of the input end of the temperature detection module 11. Another GPIO2 port of the screen drive board TCON is used as the target response square wave signal generation port, and this GPIO2 port is connected to the output end of the temperature detection module 11. The screen drive board TCON can detect the output driving voltage Vo at the output end of the temperature detection module 11 through the GPIO2 port, and generate a corresponding target response square wave signal through this GPIO2 port based on the detected output driving voltage Vo that reaches the preset driving voltage, the voltage maintenance duration of the output driving voltage Vo that reaches the preset driving voltage, and the driving cycle of the input driving voltage, and return the target response square wave signal to the screen drive board TCON.

Further, the temperature detection module 11 includes a thermistor R1 and a capacitor C1.

One end of the thermistor R1 is connected to the signal output end of the screen drive board TCON, and the other end of the thermistor R1 is connected to the signal input end of the screen drive board TCON. One end of the capacitor C1 is connected to the connection line between the thermistor R1 and the signal input end, and the other end of the capacitor C1 is grounded.

As can be seen from FIG. 8, the temperature detection module 11 in this embodiment is an RC integrating circuit. The thermistor R1 in the RC integrating circuit is used to reflect the display temperature of the display panel. When the input end of the RC integrating circuit receives the initial driving voltage of the initial response square wave signal, the capacitor C1 inside the RC integrating circuit starts to charge, and the output driving voltage at the output end of the RC integrating circuit changes in an exponential law.

When the thermistor R1 is a negative temperature coefficient thermistor, the formula of the RC integrating circuit is the first formula:

$$Vo = \frac{Vi}{RC} * t'$$ ————first formula.

Vo is the output driving voltage, Vi is the input driving voltage, RC is the resistance value of the RC integrating circuit, and $t'$ represents the time required for the output driving voltage to reach the preset driving voltage. It can be seen from first formula that $t'$ is inversely proportional to RC. The lower the display temperature, the larger the resistance value of the thermistor R1, and the longer the time required to reach the preset driving voltage.

When the thermistor R1 is a positive temperature coefficient thermistor, the formula of the RC integrating circuit is the second formula:

$$Vo = Vi(RC) * t'$$ ————second formula.

Vo is the output driving voltage, Vi is the input driving voltage, RC is the resistance value of the RC integrating circuit, and $t'$ represents the time required for the output driving voltage to reach the preset driving voltage. It can be seen from second formula that $t'$ is proportional to RC. The lower the display temperature, the smaller the resistance value of the thermistor R1, and the shorter the time required to reach the preset driving voltage.

In this embodiment, the display temperature of the display panel is detected by the RC integrating circuit, which can reduce the cost of accelerating the response speed of each pixel to the input display signal under various temperatures to a certain extent. The RC integrating circuit is combined with the screen drive board TCON to dynamically obtain the target response square wave signals under various display temperatures, and dynamically obtain the response duration parameter tables based on the obtained target response square wave signals, thereby realizing the dynamic compensation of the driving voltage.

In addition, the present application also provides a readable storage medium. A computer program is stored on the readable storage medium, and when the computer program is executed by a processor, the steps of the above-mentioned driving method for the display panel are implemented.

It should be noted that in this document, the terms "include", "include" or any other variant thereof are intended to cover non-exclusive inclusion, so that a process, method, article or system including a series of elements not only includes those elements, but also includes other elements not explicitly listed, or further includes elements inherent to such process, method, article or system. Without more restrictions, an element defined by the statement "including a..." does not exclude the existence of other identical elements in the process, method, article or system including the element.

The serial numbers of the embodiments of the present application are only for description, and do not represent the advantages or disadvantages of the embodiments.

Through the description of the above embodiments, those skilled in the art can clearly understand that the methods of the above embodiments can be implemented by means of software plus a necessary general hardware platform, and of course, can also be implemented by hardware, but in many cases, the former is a better implementation mode. Based on this understanding, the technical solution of the present application essentially or the part that contributes to the existing technology can be embodied in the form of a software product. The computer software product is stored in a storage medium (such as ROM/RAM, magnetic disk, optical disk) as mentioned above, and includes several instructions to make a terminal device ,which can be a mobile phone, a computer, a server, an air conditioner, or a network device, etc., execute the methods described in each embodiment of the present application.

The above are only some embodiments of the present application, and do not limit the patent scope of the present application. Any equivalent structure or equivalent process transformation made by using the description and drawings of the present application, or directly or indirectly applied in other related technical fields, is equally included in the patent protection scope of the present application.

## Claims

1.  A driving method for a display panel, **characterized by** comprising the following steps:

    (S10), converting an initial response square wave signal based on a current display temperature to obtain a target response square wave signal, wherein the response square wave signal represents a duty ratio of a response duration within a preset driving cycle;
    (S20), determining a call requirement based on a target duty ratio in the target response square wave signal; and
    (S30), calling a target response duration parameter table meeting the call requirement, and driving the display panel to work at the current display temperature based on the target response duration parameter table.

2.  The driving method for the display panel according to claim 1, wherein the current display temperature is a temperature of the display panel at a current moment detected by a temperature detection module, and the initial response square wave signal represents an initial response duration of flipping liquid crystal molecules within a driving cycle at the current moment.

3.  The driving method for the display panel according to claim 1, wherein the target duty ratio represents a target response duration required for flipping liquid crystal molecules at the current display temperature in the target response square wave signal.

4.  The driving method for the display panel according to claim 1, wherein before the step of converting the initial response square wave signal based on the current display temperature, the driving method further comprises:

    (A10), obtaining a driving cycle for driving the display panel to work at a current moment, an initial driving voltage output within the driving cycle, and an initial response duration for outputting the initial driving voltage;
    (A20), generating the initial response square wave signal based on the driving cycle, the initial driving voltage and the initial response duration, and outputting the initial response square wave signal to a temperature detection module; and
    (A30), after detecting the current display temperature of the display panel at the current moment through the temperature detection module, executing the step of converting the initial response square wave signal based on the current display temperature.

5. The driving method for the display panel according to claim 4, wherein the step of obtaining the driving cycle for driving the display panel to work at the current moment, the initial driving voltage output within the driving cycle, and the initial response duration for outputting the initial driving voltage comprises:
dynamically obtaining, by a screen drive board, the driving cycle for driving the display panel to work at the current moment, the driving voltage output within the driving cycle, and the response duration for outputting the driving voltage.

6. The driving method for the display panel according to claim 4, wherein the step of generating the initial response square wave signal based on the driving cycle, the initial driving voltage and the initial response duration and outputting the initial response square wave signal to the temperature detection module comprises:
taking a general-purpose input/output port of the screen drive board as an initial response square wave signal generation port, and generating a corresponding initial response square wave signal based on an obtained driving cycle, an obtained initial driving voltage and an obtained initial response duration through the general-purpose input/output port.

7. The driving method for the display panel according to claim 4, wherein the step of converting the initial response square wave signal based on the current display temperature to obtain the target response square wave signal comprises:

(S101), after receiving the initial response square wave signal through the temperature detection module, taking an initial driving voltage of the initial response square wave signal as an input driving voltage of the temperature detection module, identifying an output driving voltage output by the temperature detection module based on the input driving voltage, and obtaining a voltage rising status of the output driving voltage within the driving cycle;
(S102), in response to identifying that the output driving voltage is equal to a preset driving voltage, taking a voltage when the output driving voltage is equal to the preset driving voltage as a target driving voltage, and determining a voltage maintenance duration of the target driving voltage based on the voltage rising status; and
(S103), generating the target response square wave signal based on the driving cycle, the target driving voltage and the voltage maintenance duration.

8. The driving method for the display panel according to claim 1, wherein before the step of determining the call requirement based on the target duty ratio in the target response square wave signal, the driving method further comprises:

(B10), returning to execute the step of converting the initial response square wave signal based on the current display temperature to obtain the target response square wave signal until a number of obtained target response square wave signals is equal to a preset number of signals, and respectively determining an expected response duration reflected by each of target duty ratios based on the target duty ratio in each of the target response square wave signals;
(B20), in response to determining all expected response durations are within a same display temperature range, executing the step of determining the call requirement based on the target duty ratio in the target response square wave signal; and
(B30), in response to determining the expected response durations are not within the same display temperature range, executing the step of converting the initial response square wave signal based on the current display temperature to obtain the target response square wave signal; or
(B40), after selecting target response direction signals meeting a preset response square wave signal condition from the target response square wave signals as the target response square wave signals in a subsequent process of determining whether all the expected response durations are within the same display temperature range, executing the step of converting the initial response square wave signal based on the current display temperature to obtain the target response square wave signal, wherein the preset response square wave signal condition is: taking a display temperature range where an expected response duration reflected by a target duty ratio of a last obtained target response square wave is located as a reference display temperature range, display temperature ranges where expected response durations reflected by target duty ratios of other target response square wave signals are located is in the reference display temperature range and the other target response square wave signals are continuous with the last obtained target response square wave.

9. The driving method for the display panel according to claim 1, wherein the step of determining the call requirement based on the target duty ratio in the target response square wave signal comprises:

(S201), determining an expected response duration for driving the display panel to work at the current display temperature based on the target duty ratio; and
(S202), determining the call requirement of response duration parameter tables as a preset response duration is sufficient to reflect the expected response duration.

10. The driving method for the display panel according to claim 9, wherein the expected response duration is configured to ensure no blur or ghosting in a display picture formed by flipping liquid crystal molecules.

11. The driving method for the display panel according to claim 9, wherein the step of calling the target response duration parameter table meeting the call requirement, and driving the display panel to work at the current display temperature based on the target response duration parameter table comprises:

(S301), filtering the response duration parameter table based on the call requirement to obtain and call the target response duration parameter table meeting the call requirement; and
(S302), querying the target response duration parameter table to obtain a compensation voltage for a target driving voltage, compensating the target driving voltage based on the compensation voltage, and driving the display panel to work based on a compensated target driving voltage.

12. A display panel, **characterized by** comprising a driving apparatus for the display panel, a memory, a processor, and a computer processing program stored in the memory and executable on the processor, wherein the steps of the driving method for the display panel according to any one of claims 1 to 11 are implemented when the computer processing program is executed by the processor, and the driving apparatus for the display panel comprises:

a conversion module (10) configured to convert an initial response square wave signal based on a current display temperature to obtain a target response square wave signal, wherein the response square wave signal represents a duty ratio of a response duration within a preset driving cycle;
a determination module (20) configured to determine a call requirement based on a target duty ratio in the target response square wave signal; and
a calling module (30) configured to call a target response duration parameter table meeting the call requirement, and drive the display panel to work at the current display temperature based on the target response duration parameter table.

13. The display panel according to claim 12, wherein the conversion module (10) comprises a screen drive board (TCON) and a temperature detection module (11), a signal output end of the screen drive board (TCON) is connected to an input end of the temperature detection module (11) and is configured to transmit an initial square wave signal to the temperature detection module (11), and a signal input end of the screen drive board (TCON) is connected to an output end of the temperature detection module (11) and is configured to receive the output driving voltage output by the temperature detection module (11); and
the screen drive board (TCON) comprises the determination module (20) and the calling module (30).

14. The display panel according to claim 13, wherein the temperature detection module (11), comprises a thermistor (R1) and a capacitor (C1); and
one end of the thermistor (R1) is connected to the signal output end of the screen drive board (TCON), the other end of the thermistor (R1) is connected to the signal input end of the screen drive board (TCON), one end of the capacitor (C1) is connected to a connection line between the thermistor (R1) and the signal input end of the screen drive board (TCON), and the other end of the capacitor (C1) is grounded.

15. A computer-readable storage medium, **characterized in that** a computer program is stored on the computer-readable storage medium, and the steps of the driving method for the display panel according to any one of claims 1 to 11 are implemented when the computer program is executed by a processor.

1005

1001

1002

processor

1003          1004

user

interface

network
interface

operating system

network communication
module

user interface module

computer processing
program

memory

FIG. 1

converting an initial response square wave signal based on the
current display temperature to obtain a target response square
wave signal

S10

determining a call requirement based on the target duty ratio in
the target response square wave signal

S20

calling a target response duration parameter table that meets
the call requirement, and driving the display panel to work at
the current display temperature based on the target response
duration parameter table

S30

FIG. 2

FIG. 3

| -20℃~-5℃ | → | 20%→15%<br>15% trigger | → | first response<br>duration parameter<br>table |
| -5℃~10℃ | → | 25%→20%<br>20% trigger | → | second response<br>duration parameter<br>table |
| 10℃~25℃ | → | 25% | → | default response<br>duration parameter<br>table |
| 25℃~40℃ | → | 25%→30%<br>30% trigger | → | third response<br>duration parameter<br>table |
| 40℃~55℃ | → | 30%→35%<br>35% trigger | → | fourth response<br>duration parameter<br>table |

FIG. 4

A10

obtaining the driving cycle for driving the display panel to work at the current moment, the initial driving voltage output within the driving cycle, and the initial response duration for outputting the initial driving voltage

A20

generating the initial response square wave signal based on the driving cycle, the initial driving voltage and the initial response duration, and outputting the initial response square wave signal to a temperature detection module

A30

after detecting the current display temperature of the display panel at the current moment through the temperature detection module, executing the step of converting the initial response square wave signal based on the current display temperature

FIG. 5

B10

returning to execute the step of converting the initial response square wave signal based on the current display temperature to obtain the target response square wave signal until the number of the obtained target response square wave signals is equal to the preset number of signals, and respectively determining the expected response duration reflected by each of target duty ratios based on the target duty ratio in each of the target response square wave signals

all the expected response durations are within the same display temperature range

the expected response durations are not within the same display temperature range

B10

B30

B40

executing the step of determining the call requirement based on the target duty ratio in the target response square wave signal

executing the step of converting the initial response square wave signal based on the current display temperature to obtain the target response square wave signal

selecting the target response direction signals that meet the preset response square wave signal conditions from the target response square wave signals as the target response square wave signals in the subsequent process of determining whether all the expected response durations are within the same display temperature range, and executing the step of converting the initial response square wave signal based on the current display temperature to obtain the target response square wave signal

FIG. 6

driving apparatus
10

conversion module
20

determination module
30

length planning module

FIG. 7

GPIO1 TCON GPIO2

Vi R1 Vo C1 11

FIG. 8

## INTERNATIONAL SEARCH REPORT

| International application No. |
| --- |
| **PCT/CN2024/092856** |

**A.    CLASSIFICATION OF SUBJECT MATTER**

G09G3/36(2006.01)i;  G09G3/32(2016.01)i;  G09G3/20(2006.01)i;  G09G3/34(2006.01)i;  G02F1/137(2006.01)i;  G02F1/1333(2006.01)i;  G02F1/1337(2006.01)i;  G02F1/1335(2006.01)i;  G02F1/133(2006.01)i

According to International Patent Classification (IPC) or to both national classification and IPC

**B.    FIELDS SEARCHED**

Minimum documentation searched (classification system followed by classification symbols)

IPC:G09G3 G02F1

Documentation searched other than minimum documentation to the extent that such documents are included in the fields searched

Electronic data base consulted during the international search (name of data base and, where practicable, search terms used)

CNTXT, ENTXTC, ENTXT, VEN, CJFD, CNKI: 显示, 面板, 液晶, 驱动, 方波, 占空比, 温度, 转换, 响应时长, 响应时间, 速度, 速率, 拖影, 模糊, 拖尾, 延时, 动态, 补偿, 电压, 翻转, display, panel, liquid crystal, driv+, square wave, duty cycle, duty ratio, temperature, convert+, transform+, respons+, respond, time, duration, speed, smear, blurring, delay, dynamic, compensat+, voltage, turn+

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 116844501 A (HKC CO., LTD.) 03 October 2023 (2023-10-03)<br>description, paragraphs 5-150, and figures 1-8 | 1-15 |
| A | CN 114624933 A (BEIJING BOE DISPLAY TECHNOLOGY CO., LTD. et al.) 14 June 2022 (2022-06-14)<br>description, paragraphs 5-113, and figures 1-10 | 1-15 |
| A | CN 103000144 A (SHENZHEN TCL NEW TECHNOLOGY CO., LTD.) 27 March 2013 (2013-03-27)<br>entire document | 1-15 |
| A | CN 114783359 A (SHENZHEN CHINA STAR OPTOELECTRONICS SEMICONDUCTOR DISPLAY TECHNOLOGY CO., LTD.) 22 July 2022 (2022-07-22)<br>entire document | 1-15 |
| A | CN 115691446 A (BOE TECHNOLOGY GROUP CO., LTD. et al.) 03 February 2023 (2023-02-03)<br>entire document | 1-15 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **09 July 2024** | **06 August 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 745 952 A1**

**INTERNATIONAL SEARCH REPORT**

International application No.

**PCT/CN2024/092856**

| C. | DOCUMENTS CONSIDERED TO BE RELEVANT | |
|---|---|---|
| Category* | Citation of document, with indication, where appropriate, of the relevant passages | Relevant to claim No. |
| A | US 2010165222 A1 (SAMSUNG ELECTRONICS CO., LTD.) 01 July 2010 (2010-07-01) entire document | 1-15 |
| A | US 2021005125 A1 (HKC CORP., LTD.) 07 January 2021 (2021-01-07) entire document | 1-15 |

Form PCT/ISA/210 (second sheet) (July 2022)

24

**INTERNATIONAL SEARCH REPORT**
Information on patent family members

International application No.

**PCT/CN2024/092856**

| Patent document cited in search report | | | Publication date (day/month/year) | Patent family member(s) | | | Publication date (day/month/year) |
|---|---|---|---|---|---|---|---|
| CN | 116844501 | A | 03 October 2023 | None | | | |
| CN | 114624933 | A | 14 June 2022 | CN | 114624933 | B | 09 April 2024 |
| CN | 103000144 | A | 27 March 2013 | CN | 103000144 | B | 04 May 2016 |
| CN | 114783359 | A | 22 July 2022 | None | | | |
| CN | 115691446 | A | 03 February 2023 | None | | | |
| US | 2010165222 | A1 | 01 July 2010 | JP | 2010156972 | A | 15 July 2010 |
| | | | | EP | 2202720 | A1 | 30 June 2010 |
| | | | | KR | 20100076230 | A | 06 July 2010 |
| US | 2021005125 | A1 | 07 January 2021 | WO | 2020087575 | A1 | 07 May 2020 |
| | | | | US | 11100836 | B2 | 24 August 2021 |
| | | | | CN | 109308881 | A | 05 February 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310946935